# EUROPÄISCHE PATENTSCHRIFT

(11) **EP 2 952 838 B1**
(45) Veröffentlichungstag und Bekanntmachung des Hinweises auf die Patenterteilung: **29.07.2020**
(21) Anmeldenummer: 15167788.7
(22) Anmeldetag: 15.05.2015
(51) Int. Cl.: F25D 23/02

(54) **TÜR FÜR EIN HAUSHALTSKÄLTEGERÄT MIT EINEM VAKUUMISOLATIONSELEMENT SOWIE HAUSHALTSKÄLTEGERÄT**
DOOR FOR A HOUSEHOLD REFRIGERATION DEVICE COMPRISING A VACUUM INSULATION MEMBER AND HOUSEHOLD REFRIGERATION DEVICE
PORTE D'UN APPAREIL FRIGORIFIQUE MÉNAGER DOTÉE D'UN ÉLÉMENT D'ISOLATION SOUS VIDE ET APPAREIL FRIGORIFIQUE MÉNAGER

(30) Priorität: 03.06.2014 DE 102014210473
(43) Veröffentlichungstag der Anmeldung: 09.12.2015
(73) Patentinhaber: BSH Hausgeräte GmbH, 81739 München (DE)
(72) Erfinder: Ehninger, Christian, 89537 Giengen an der Brenz (DE); Görz, Alexander, 73432 Aalen (DE); Seelmeier, Michael, 73572 Heuchlingen (DE)

(56) Entgegenhaltungen:
- DE-A1-102009 002 800
- GB-A- 729 393
- JP-A- 2012 107 770
- JP-U- S5 998 287

## Beschreibung

Die Erfindung betrifft eine Tür für ein Haushaltskältegerät mit einem Vakuumisolationselement mit einer Hülle, welche einen evakuierten Hohlraum umschließt. Die Hülle weist eine Innenschale und eine Außenschale auf. Des Weiteren betrifft die Erfindung ein Haushaltskältegerät mit einer derartigen Tür.

Bei Haushaltskältegeräten, wie beispielsweise einem Kühlgerät oder einem Gefriergerät oder einem Kühl-Gefrier-Kombigerät wird ein Innenraum, in dem Kältegut in Form von Lebensmitteln, die Speisen und Getränke umfassen, durch Wandungen begrenzt. Dazu kann ein Innenbehälter vorgesehen sein, der frontseitig eine Öffnung aufweist, die durch eine Tür verschließbar ist. Auch die Tür stellt in dem Zusammenhang eine Wandung dar.

Die thermischen Isolationskörper können in unterschiedlicher Ausgestaltung vorgesehen sein. So ist bekannt, dass ein Isolationsschaum vorgesehen ist. Ebenso sind bei neueren Ausgestaltungen Vakuumisolationselemente bekannt. So ist beispielsweise aus der WO 2012/031885 A2 ein Gehäuse für ein Kältegerät bekannt, bei dem ein Isolationskörper durch eine äußere und eine innere Schale begrenzt ist und in einem Zwischenraum zwischen den Schalen eine Isolationsmaterialpackung angeordnet ist. Das Isolationsmaterial kann beispielsweise ein hochporöser Feststoff sein.

Aus der DE 10 2009 002 800 A1 ist ein Haushaltskältegerät und eine wärmeisolierende Wandung dafür bekannt. Bei dieser Ausgestaltung kann der Isolationskörper zwei Schalen bzw. Häute aufweisen, zwischen denen wiederum ein Hohlraum ausgebildet ist, der evakuiert sein kann. Bei einer Ausführung kann vorgesehen sein, dass eine Haut dieses Isolationskörpers selbst einen eckigen Rahmen aufweist, an dem dann eine plattenartige Innenhaut und eine Außenhaut befestigt sind, so dass dadurch eine Gesamthülle für den Isolationskörper gebildet ist.

Aus der DE 10 2009 002 800 A1 ist auch bekannt, dass eine Innenschale mit einer metallenen Außenschale eines Vakuumisolationselements durch Kleben und Schweißen verbindbar ist.

Aus der DE 10 2011 079 209 A1 ist ein Vakuumisolationselement für ein Haushaltskältegerät bekannt, bei welchem die Hülle eine Innenschale und eine Außenschale aufweist und zumindest eine Schale eine einlagige Folie ist.

GB 729 393 A offenbart eine Tür für ein Kältegerät, wobei eine innere Platte und eine äußere Platte zusammengeschweißt werden, um einen evakuierten Hohlraum zu begrenzen. Dieser Verbund wird seitlich durch ein separates Bauteil eingefasst.

Es ist Aufgabe der vorliegenden Erfindung, eine Tür für ein Haushaltskältegerät sowie ein derartiges Haushaltskältegerät zu schaffen, bei welcher bzw. bei welchem das Vakuumisolationselements durch seine Lagespezifizierung in der Tür multifunktioneller ist.

Diese Aufgabe wird durch eine Tür und ein Haushaltskältegerät gemäß dem unabhängigen Anspruch 1 gelöst.

Eine erfindungsgemäße Tür für ein Haushaltskältegerät umfasst ein Vakuumisolationselement mit einer Hülle, welche einen evakuierten Hohlraum umschließt. Die Hülle weist eine Innenschale auf, die im geschlossenen Zustand der Tür einem durch die Tür verschließbaren Aufnahmeraum beziehungsweise Innenraum für Lebensmittel des Haushaltskältegeräts zugewandt ist. Die Hülle umfasst darüber hinaus eine mit der Innenschale verbundene Außenschale, die im geschlossenen Zustand der Tür dem durch die Tür verschließbaren Aufnahmeraum beziehungsweise Innenraum für Lebensmittel zugewandt ist. Die Hülle ist somit insbesondere durch diese beiden Schalen, nämlich die Innenschale und die Außenschale, gebildet, durch welche auch der Hohlraum begrenzt ist. In dem Hohlraum kann vorzugsweise ein Stützkörper angeordnet sein.

Ein wesentlicher Gedanke der Erfindung ist darin zu sehen, dass das Vakuumisolationselement so in der Tür angeordnet ist, dass durch die Außenschale zumindest bereichsweise eine Außenseite der Tür gebildet ist. In ihrer örtlichen Lage ist das Vakuumisolationselement in dem Aufbau der Tür somit derart positioniert, dass die Außenschale nicht nur einen äußeren Abschluss des Vakuumisolationselements selbst bildet, sondern auch einen äußeren Abschluss der Tür selbst bildet, wobei der darüber hinaus noch dahingehend spezifiziert ist, dass dies eine dem Innenraum abgewandte Außenseite der Tür betrifft. Das Vakuumisolationselement ist somit auch multifunktioneller in der Tür eingesetzt, denn durch die Außenschale des Vakuumisolationselements wird eine Doppelfunktion bezüglich der Begrenzung des Vakuumisolationselements einerseits und der Tür andererseits erfüllt. Es ist somit durch diese Außenschale quasi auch eine nach außen hin freiliegende und sichtbare Außenwand der Tür gebildet. Eine zusätzliche Außenwand der Tür, die dann wiederum diese Außenschale des Vakuumisolationselements abdeckt und eine äußere beziehungsweise frontseitige und somit dem Innenraum abgewandte Begrenzung der Tür bildet, ist daher nicht mehr erforderlich.

Vorzugsweise ist in dem Hohlraum ein Stützkörper angeordnet.

Vorzugsweise ist vorgesehen, dass der im Hohlraum angeordnete Stützkörper Glasfasern und/oder Perlite und/oder Kieselsäure und/oder ein Schaummaterial als thermisches Isolationsmaterial aufweist.

Vorzugsweise ist vorgesehen, dass die Außenschale aus Kunststoff ausgebildet ist. Dadurch kann sie vereinfacht hergestellt werden und weist insbesondere auch Vorteile bezüglich der thermischen Isolationswirkung des gesamten Vakuumisolationselements auf.

Besonders vorteilhaft ist es, wenn die Außenschale eine mehrlagige Folie ist. Durch einen derartigen Aufbau der Außenschale kann gegenüber einer nur einlagigen Folie eine wesentlich höhere Stabilität erzeugt werden und darüber hinaus durch diese multilagige Ausgestaltung auch individuellen Anforderungen im Hinblick auf Stoßschutz, thermische Isolationswirkung und mechanische Trägerstabilität verbessert werden.

Vorzugsweise kann ein Schichtenaufbau der Folie zumindest drei Schichten beziehungsweise Lagen, vorzugsweise zumindest vier Schichten beziehungsweise Lagen aufweisen. Vorzugsweise kann ein Schichtenaufbau dieser die Außenschale darstellenden mehrlagigen Folie 6-lagig sein, insbesondere ausschließlich aus diesen sechs Lagen aufgebaut sein.

Vorzugsweise kann vorgesehen sein, dass der Schichtenaufbau eine außenliegende Abschlussschicht aufweist, die beispielsweise Hochglanz-Polystyrol und/oder Silberteilchen aufweist. Insbesondere ist diese Abschlussschicht aus Hochglanz-Polystyrol und/oder Silberteilchen bestehend ausgebildet. Anschließend an diese Abschlussschicht kann dann eine erste Trägerschicht ausgebildet sein. Diese erste Trägerschicht ist vorzugsweise als Hauptschicht für die mechanische Festigkeit vorgesehen und kann beispielsweise Polystyrol oder ABS aufweisen beziehungsweise aus diesen Materialien bestehend ausgebildet sein. Dem Schichtenaufbau auf diese erste Trägerschicht folgend kann dann eine erste Haftvermittlungsschicht ausgebildet sein, welche auch als Verbindungsschicht oder Kleberschicht bezeichnet werden kann. Auf diese erste Haftvermittlungsschicht folgt dann vorzugsweise eine diffusionsdichte beziehungsweise diffusionshemmende Sperrschicht. Diese Sperrschicht kann beispielsweise aus EVOH oder PVdC gebildet sein.

Vorzugsweise schließt an diese Sperrschicht zum Schichtenaufbau eine zweite Haftvermittlungsschicht an, die aus dem gleichen oder einem unterschiedlichen Material wie die erste Haftvermittlungsschicht ausgebildet sein kann. Vorzugsweise wird der beispielhafte sechslagige Schichtenaufbau durch eine auf die zweite Haftvermittlungsschicht folgende zweite Trägerschicht abgeschlossen. Diese zweite Trägerschicht kann Polyethylen aufweisen. Insbesondere diese zweite Trägerschicht dient auch vorzugsweise zur randseitigen Verbindung mit der Innenschale. Sie kann daher auch als Schalenverbindungsschicht, insbesondere Schweißschicht, bezeichnet werden.

Die Innenschale ist erfindungsgemäß eine einlagige Folie, wobei hier eine metallisierte Folie oder eine Aluminiumverbundfolie oder auch eine Kunststoffbarrierefolie ausgebildet sein kann.

Vorzugsweise ist vorgesehen, dass die Außenschale zumindest in dem Bereich, mit dem die Außenseite der Tür gebildet ist, uneben ausgebildet ist. Dadurch kann auch durch das Vakuumisolationselement spezifischen Formerfordernissen einer Außenseite der Tür entsprochen werden.

Vorzugsweise ist vorgesehen, dass der Bereich, mit dem die Außenseite der Tür durch die Außenschale gebildet ist, der Innenschale abgewandt bombiert beziehungsweise entsprechend gekrümmt ist. In einer Horizontalschnittdarstellung durch die Tür ist somit dieser Bereich der Außenschale der Tür, der uneben ausgebildet ist, vorzugsweise konvex gekrümmt.

Vorzugsweise ist vorgesehen, dass die Innenschale und die Außenschale an einem die Schale verbindenden Verbindungsrand, an dem die beiden Schalen insbesondere verschweißt verbunden sind, in eine schlitzartige erste Aufnahme in einem Träger angeordnet sind. Der Träger stellt ein zu dem Vakuumisolationselement separates Bauteil dar.

Durch einen derartig spezifizierten Eingriff beziehungsweise eine mechanische Kopplung zwischen dem Träger und dem Vakuumisolationselement wird dieses Vakuumisolationselement stabil gehalten und es kann eine maximale Annäherung zwischen dem Träger und dem Vakuumisolationselement erreicht werden. Unerwünschte Spalte zwischen dem Träger und dem Vakuumisolationselement können dadurch vermieden werden, wodurch sich auch eine Schmutzansammlung in einem derartigen nicht vorhandenen Spalt zwischen dem Träger und dem Vakuumisolationselement vermeiden lässt. Darüber hinaus ist gerade durch diese Ausgestaltung auch dieser Verbindungsrand geschützt angeordnet und kann nicht beschädigt werden, da er in dem Zusammenhang somit nicht freiliegend und zugänglich ist.

Vorzugsweise ist vorgesehen, dass eine Außenseite des Trägers in ihrem Konturenverlauf den unebenen Konturenverlauf des Bereichs der Außenschale, mit dem die Außenseite der Tür gebildet ist, fortsetzend angepasst ist und durch die Außenseite des Trägers ein weiterer Außenseitenbereich der Tür gebildet ist. Die Außenseite der Tür bildet sich somit bei diesem Ausführungsbeispiel einerseits durch einen Außenseitenbereich des Vakuumisolationselements, der durch die Außenschale gebildet ist, und andererseits durch einen Außenseitenbereich des Trägers. Durch die spezifische Anordnung und Ausgestaltung des Trägers und des Vakuumisolationselements ist insbesondere auch ein stetiger, vorzugsweise bündiger Übergang zwischen diesen beiden Außenseitenbereichen des Vakuumisolationselements und des Trägers geschaffen.

Erfindungsgemäß ist vorgesehen, dass die Innenschale auf der der Außenschale abgewandten Seite durch ein Abdeckelement abgedeckt ist. Durch diese Ausgestaltung wird die vorzugsweise sehr dünne Innenschale, die insbesondere als einlagige Folie ausgebildet ist, geschützt. Darüber hinaus wird durch ein derartiges Abdeckelement auch eine zusätzliche Funktion dahingehend generiert, dass es als Aufnahme beziehungsweise

Träger für weitere Komponenten, beispielsweise einem Türabsteller oder dergleichen, dient.

Vorzugsweise ist vorgesehen, dass das Abdeckelement beabstandet zu der Innenschale angeordnet ist und zwischen dem Abdeckelement und der Innenschale ein Hohlraum gebildet ist. Dadurch kann beispielsweise verhindert werden, dass bei einer Krafteinwirkung auf das Abdeckelement und einer daraus resultierenden gewissen Verformung eine unmittelbare Verformung der Innenschale auftreten würde, die dann gegebenenfalls zu einer Beschädigung der Innenschale führen könnte.

In vorteilhafter Weise ist vorgesehen, dass dieser Hohlraum zwischen der Innenschale und dem Abdeckelement zumindest bereichsweise mit einem Füllmaterial, insbesondere einem thermisch isolierenden Füllmaterial, gefüllt ist. Dadurch wird die thermische Isolationswirkung der Tür nochmals verbessert und die Stabilität des Aufbaus, insbesondere zwischen dem Abdeckelement und dem Vakuumisolationselement, erhöht.

Vorzugsweise ist vorgesehen, dass das Abdeckelement mit einem flanschartigen Seitenrand in eine schlitzartige zweite Aufnahme eines Trägers angeordnet ist. Dadurch wird das Abdeckelement quasi separiert zum Vakuumisolationselement gehalten. Indem darüber hinaus das Vakuumisolationselement mit seinem Verbindungsrand in eine unterschiedliche erste Aufnahme wie der Seitenrand des Trägers, der in eine zweite Aufnahme eingeführt ist, angeordnet ist, kann auch hier ein Aneinanderreiben und ein daraus resultierendes mögliches Beschädigen des Verbindungsrands des Vakuumisolationselements vermieden werden.

Erfindungsgemäß ist vorgesehen, dass das Abdeckelement uneben ausgebildet ist und zumindest eine kerbenartige Ausbuchtung aufweist. Diese kerbenartige Ausbuchtung ist insbesondere mit zunehmendem Abstand zur Innenschale sich verjüngend ausgebildet. Die Ausbuchtung erstreckt sich parallel zu einem flanschartigen Seitenrand des Abdeckelements und ist an den Seitenrand angrenzend ausgebildet. Durch eine derartige Ausgestaltung, bei welcher diese Ausbuchtung vollständig außermittig und sehr seitlich orientiert ist, kann bei geschlossener Tür an einem Gehäuse des Haushaltskältegeräts, an dem die Tür bewegbar angeordnet ist, eine bewusste Engstelle geschaffen werden, die dann auch als Dichtungslabyrinth wirkt.

Der Träger ist mit seinen Seitenteilen und gegebenenfalls vorzugsweise mit zusätzlichen horizontalem Oberteil und horizontalem Unterteil als Profil ausgebildet und kann beispielsweise aus Kunststoff oder aus Metall sein. Der Träger kann aus Einzelteilen oder er kann auch einstückig ausgebildet sein.

Es kann vorgesehen sein, dass der von der Außenschale gebildete Außenseitenbereich der Tür farblich und/oder strukturell gleich oder unterschiedlich zu demjenigen Außenseitenbereich, der durch den Träger gebildet ist, ausgebildet ist.

In dem Hohlraum zwischen der Innenschale und dem Abdeckelement kann ein thermisch isolierendes Medium wie beispielsweise ein Schaummaterial oder EPS oder EPP angeordnet sein. Es kann jedoch lediglich auch nur ein anderer Füllstoff enthalten sein, der nur bereichsweise den Hohlraum ausfüllt und stabilisiert.

Insbesondere kann durch Funktionsbauteile, welche der mechanischen Stabilisierung der Tür und/oder der Bereitstellung der Lagerung und/oder der Aufnahme der Türdichtung und/oder der Befestigung oder der Funktion eines Türgriffs und/oder einer weiteren Funktion dienen, so angeordnet, dass sie einen Außenseitenbereich der Tür zusätzlich zum Außenseitenbereich, der durch die Außenschale des Vakuumisolationselements gebildet ist, ausgebildet ist. Das die Innenschale zum Innenraum beziehungsweise Aufnahmeraum hin abdeckende Abdeckelement ist vorzugsweise nicht aus Kunststoff ausgebildet.

Vorzugsweise ist vorgesehen, dass die Innenschale und die Außenschale an einem Träger angeordnet sind, an welchem zumindest ein weiteres Funktionselement der Tür angeordnet ist. Der Träger kann als Funktionselemente beispielsweise einen Türgriff und/oder eine Bedien- und/oder Anzeigeeinheit und/oder eine Dichtung aufnehmen.

Vorzugsweise umfasst der Träger zumindest zwei längliche Trägerteile, die sich in vertikaler Richtung der Tür an gegenüberliegenden Seiten des Vakuumisolationselements erstrecken. Vorzugsweise ist vorgesehen, dass der Träger als umlaufender Rahmen ausgebildet ist, wobei vorzugsweise dem Innenraum beziehungsweise Aufnahmeraum des Haushaltskältegeräts abgewandte Außenseiten des Trägers Außenseitenbereiche der Tür bilden.

Vorzugsweise ist vorgesehen, dass die Siegelfläche beziehungsweise der Verbindungsrand zwischen der Innenschale und der Außenschale des Vakuumisolationselements in einer Ebene orientiert ist, welche parallel zu einer Hauptebene der Tür orientiert ist.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts; und
- Fig. 2: eine Schnittdarstellung durch ein Ausführungsbeispiel einer erfindungsgemäßen Tür des Haushaltskältegeräts.

In den Figuren werden gleiche oder funktionsgleiche Elemente mit den gleichen Bezugszeichen versehen.

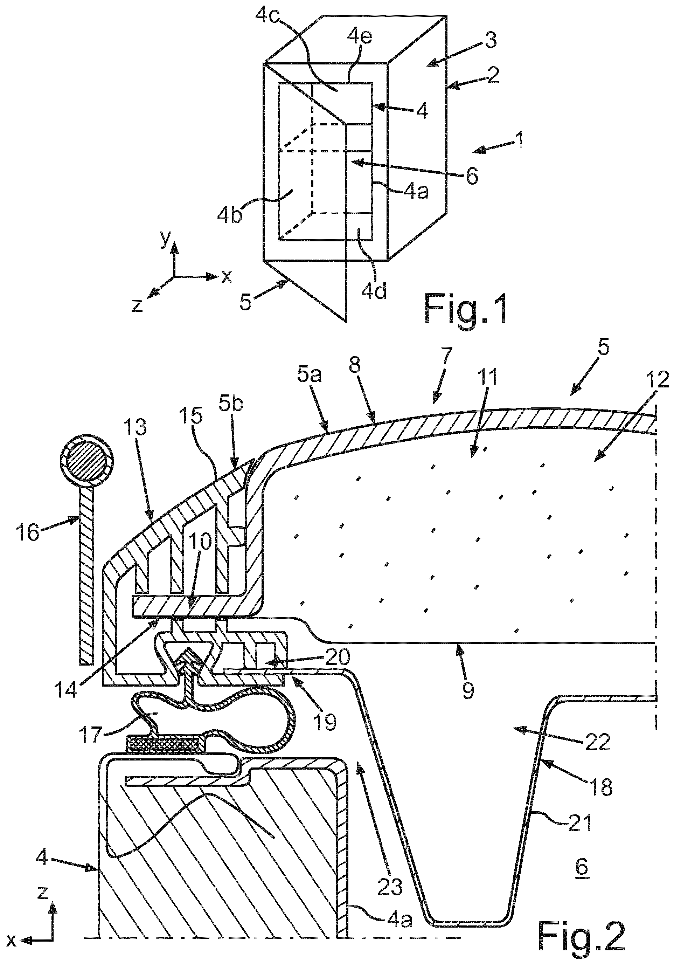

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einen Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vakuumisolationstür, insbesondere eine Vollvakuumtür, ist. Dazu ist vorgesehen, dass die Tür 5 zumindest ein plattenartiges Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer Horizontalschnittdarstellung und somit in der x-z-Ebene als Schnittebene das Haushaltskältegerät 1 im Bereich der Tür 5 teilweise gezeigt. Die Tür 5 ist in Fig. 2 im geschlossenen Zustand gezeigt. Die Tür 5 umfasst ein Vakuumisolationselement 7, welches im gezeigten geschlossenen Zustand der Tür 5 eine dem Innenraum 6 abgewandte Außenschale 8 und eine dem Innenraum 6 zugewandte Innenschale 9 aufweist. Die Außenschale 8 und die Innenschale 9 sind umlaufend an einem Verbindungsrand 10 miteinander verbunden, insbesondere verschweißt. Durch die Außenschale 8 und die Innenschale 9 ist eine Hülle des Vakuumisolationselements 7 gebildet, wodurch dadurch auch ein Hohlraum 11 des Vakuumisolationselements 7 begrenzt ist. In dem Hohlraum 11, der evakuiert ist, ist vorzugsweise auch ein Stützkörper 12 enthalten, der aus den bereits oben genannten beispielhaften Materialien ausgebildet sein kann.

Die Außenschale 8 ist im Ausführungsbeispiel eine mehrlagige Folie, die vorzugsweise 6-lagig ausgebildet sein kann und gemäß dem oben genannten beispielhaften Schichtenaufbau ausgebildet sein kann. Die Innenschale 9 ist vorzugsweise eine einlagige Folie, die ebenfalls gemäß den oben genannten Ausführungsbeispielen ausgebildet sein kann.

Das Vakuumisolationselement 7 ist so in der Tür 5 angeordnet, dass durch die Außenschale 8 ein äußerer Abschluss der Tür 5 gebildet ist und somit ein nach außen hin freiliegender und sichtbarer Außenseitenbereich 5a durch die Außenschale 8 gebildet ist. Dieser Außenseitenbereich 5a der Außenschale 8 ist somit dem Innenraum 6 abgewandt.

Wie zu erkennen ist, umfasst die Tür 5 darüber hinaus einen Träger 13, der vorzugsweise als umlaufender Rahmen ausgebildet ist. Der Träger 13 trägt das Vakuumisolationselement 7, wobei dazu vorgesehen ist, dass in einer ersten schlitzartigen Aufnahme 14 in den Träger 13 das Vakuumisolationselement 7 mit seinem Verbindungsrand 10 eingeführt beziehungsweise eingesteckt ist. Wie in der Schnittdarstellung zu erkennen ist, ist der Träger 13 als Profil ausgebildet, wobei in diesem Horizontalschnitt die Aufnahme 14 durch sich in Tiefenrichtung und somit in z-Richtung erstreckende Stege beziehungsweise kammartige Strukturen begrenzt ist. Wie darüber hinaus zu erkennen ist, ist die Außenschale 8 des Vakuumisolationselements 7 in dieser Horizontalschnittdarstellung uneben, insbesondere bombiert, wobei diese Bombierung eine konvexe Krümmung ist. Im Ausführungsbeispiel ist vorgesehen, dass der Träger 13 in x-Richtung unmittelbar an die Außenschale 8 angrenzt und vorzugsweise bündig dazu positioniert ist. Daher ist es vorzugsweise auch vorgesehen, dass eine dem Innenraum 6 abgewandte Außenseite 15 des Trägers 13 einen weiteren Außenseitenbereich 5b der Tür 5 bildet. Die nach außen sichtbare Wand beziehungsweise Begrenzung der Tür 5 ist dadurch durch die Außenseitenbereiche 5a und 5b gebildet.

An dem Träger 13 ist beispielhaft ein Türgriff 16 angeordnet und relativ dazu bewegbar.

Der Träger 13 trägt darüber hinaus eine Dichtung 17, die im geschlossenen Zustand der Tür 5 an dem Gehäuse 4 anliegt, wie dies in Fig. 2 zu erkennen ist.

Darüber hinaus umfasst die Tür 5 eine Abdeckung beziehungsweise ein Abdeckelement 18, welches als separates Bauteil ausgebildet ist und die Innenschale 9 zum Innenraum 6 hin abdeckt. Wie darüber hinaus zu erkennen ist, ist die Innenschale 9 von dem Abdeckelement 18 beabstandet angeordnet. Ein Seitenrand 19 des Abdeckelements 18 ist in eine zweite Aufnahme 20 des Trägers 13 eingeschoben, wobei diese zweite Aufnahme 20 ebenfalls vorzugsweise schlitzartig ausgebildet ist und örtlich unterschiedlich zur ersten Aufnahme 14 ausgebildet ist. Unmittelbar angrenzend beziehungsweise benachbart zu diesem Seitenrand 19 umfasst das Abdeckelement 18 eine zum Innenraum 6 hin orientierte und insbesondere der Innenschale 9 abgewandte Ausbuchtung 21, die sich mit zunehmendem Abstand zur Innenschale 9 hin verjüngt. Durch einen Hohlraum 22, der durch die Ausbuchtung 21 einerseits und die Beabstandung des Abdeckelements 18 von der Innenschale 9 andererseits ausgebildet ist, kann zumindest bereichsweise ein Füllmaterial eingebracht werden. Dies kann thermisch isolierend wirken oder lediglich mechanisch stabilisierend wirken. Durch die spezifische Form der Ausbuchtung 21 und ihre spezifische Position benachbart und angrenzend an den Seitenrand 19 wird erreicht, dass im in Fig. 2 gezeigten geschlossenen Zustand der Tür 5 eine Engstelle 23 zwischen der seitlichen Wandung 4a und dem Abdeckelement 18 und somit auch der Tür 5 ausgebildet ist. Dadurch wird die Dichtwirkung verbessert, indem sich quasi ein Dichtungslabyrinth ausbildet. Wie zu erkennen ist, ist die Ausbuchtung 21 mit einer derartigen Erstreckung in z-Richtung ausgebildet, dass im geschlossenen Zustand der Tür 5 in dieser Tiefenrichtung beziehungsweise z-Richtung die seitliche Wandung 4a und die Ausbuchtung 21 überlappen.

### Bezugszeichenliste

- 1: Haushaltskältegerät
- 2: Gehäuse
- 3: Außenbehälter
- 4: Innenbehälter
- 4a: seitliche Wandung
- 4b: seitliche Wandung
- 4c: hintere Wandung
- 4d: Bodenwandung
- 4e: Deckenwandung
- 5: Tür
- 5a: Außenseitenbereich
- 5b: Außenseitenbereich
- 6: Innenraum
- 7: Vakuumisolationselement
- 8: Außenschale
- 9: Innenschale
- 10: Verbindungsrand
- 11: Hohlraum
- 12: Stützkörper
- 13: Träger
- 14: schlitzartige Aufnahme
- 15: Außenseite
- 16: Türgriff
- 17: Dichtung
- 18: Abdeckelement
- 19: Seitenrand
- 20: Aufnahme
- 21: Ausbuchtung
- 22: Hohlraum
- 23: Engstelle

## Patentansprüche

1. Tür (5) für ein Haushaltskältegerät (1) mit einem Vakuumisolationselement (7) mit einer Hülle, welche einen evakuierten Hohlraum (11) umschließt, wobei die Hülle eine Innenschale (9) aufweist, die im geschlossenen Zustand der Tür (5) einem durch die Tür (5) verschließbaren Aufnahmeraum (6) für Lebensmittel des Haushaltskältegeräts (1) zugewandt ist, und eine Außenschale (8) aufweist, die im geschlossenen Zustand der Tür (5) dem durch die Tür (5) verschließbaren Aufnahmeraum (6) für Lebensmittel abgewandt ist, wobei das Vakuumisolationselement (7) so in der Tür (5) angeordnet ist, dass durch die Außenschale (8) zumindest bereichsweise ein Außenseitenbereich (5a) der Tür (5) gebildet ist, **dadurch gekennzeichnet, dass** die Innenschale (9) durch eine einlagige Folie ausgebildet ist und dass die Innenschale (9) auf der der Außenschale (8) abgewandten Seite durch ein Abdeckelement (18) abgedeckt ist, so dass die Innenschale (9) geschützt ist und dass das Abdeckelement (18) uneben ausgebildet ist und zumindest eine kerbenartige Ausbuchtung (21) aufweist, wobei sich die Ausbuchtung (21) parallel zu einem flanschartigen Seitenrand (19) erstreckt und an den Seitenrand (19) angrenzend ausgebildet ist.

2. Tür (5) nach Anspruch 1, **dadurch gekennzeichnet, dass** die Außenschale (8) aus Kunststoff ausgebildet ist.

3. Tür (5) nach Anspruch 1 oder 2, **dadurch gekennzeichnet, dass** die Außenschale (8) eine mehrlagige Folie ist.

4. Tür (5) nach einem der vorhergehenden Ansprüche, **dadurch gekennzeichnet, dass** die Außenschale (8) zumindest in dem Außenseitenbereich (5a) der Tür uneben ausgebildet ist.

5. Tür (5) nach Anspruch 4, **dadurch gekennzeichnet, dass** der Außenseitenbereich (5a) der Innenschale (9) abgewandt bombiert ist.

6. Tür (5) nach einem der vorhergehenden Ansprüche, **dadurch gekennzeichnet, dass** die Innenschale (9) und die Außenschale (8) an einem die Schalen (8, 9) verbindenden Verbindungsrand (10) in eine schlitzartige erste Aufnahme (14) in einem Träger (13) angeordnet sind.

7. Tür (5) nach Anspruch 6, **dadurch gekennzeichnet, dass** eine Außenseite (15) des Trägers (13) in ihrem Konturenverlauf den unebenen Konturenverlauf des Außenseitenbereichs (5a) des Vakuumisolationselements (7) fortsetzend angepasst ist und durch die Außenseite (15) des Trägers (13) ein weiterer Außenseitenbereich (5b) der Tür (5) gebildet ist.

8. Tür (5) nach einem der vorhergehenden Ansprüche, **dadurch gekennzeichnet, dass** das Abdeckelement (18) beabstandet zu der Innenschale (9) angeordnet ist und zwischen dem Abdeckelement (18) und der Innenschale (9) ein Hohlraum (22) gebildet ist.

9. Tür (5) nach Anspruch 8, **dadurch gekennzeichnet, dass** der Hohlraum (22) zumindest bereichsweise mit einem Füllmaterial, insbesondere einem thermisch isolierenden Füllmaterial, gefüllt ist.

10. Tür (5) nach einem der vorhergehenden Ansprüche, **dadurch gekennzeichnet, dass** das Abdeckelement (18) mit einem flanschartigen Seitenrand (19) in einer schlitzartigen zweiten Aufnahme (20) eines Trägers (13) angeordnet ist.

11. Tür (5) nach einem der vorhergehenden Ansprüche, **dadurch gekennzeichnet, dass** die Ausbuchtung (21) mit zunehmenden Abstand zur Innenschale (9) verjüngend ausgebildet ist.

12. Tür (5) nach einem der vorhergehenden Ansprüche, **dadurch gekennzeichnet, dass** die Innenschale (9) und die Außenschale (8) an einem Träger (13) angeordnet sind, an welchem zumindest ein weiteres Funktionselement der Tür (5), insbesondere ein Türgriff (16) und/oder eine Bedien- und/oder Anzeigeeinheit und/oder eine Dichtung (17), angeordnet ist.

13. Tür (5) nach einem der vorhergehenden Ansprüche, **dadurch gekennzeichnet, dass** die Innenschale (9) und die Außenschale (8) an einem Träger (13) angeordnet sind, welcher zumindest an den beiden Längsseiten der Tür (5) sich erstreckt, insbesondere als umlaufender Rahmen ausgebildet ist, und Außenseiten (15) des Trägers (13) Außenseitenbereiche (5b) der Tür (5) bilden.

14. Haushaltskältegerät (1) mit einer Tür (5) nach einem der vorhergehenden Ansprüche.

## Claims

1. Door (5) for a household refrigeration appliance (1) with a vacuum insulation element (7) with an enclosure, which surrounds an evacuated cavity (11), wherein the enclosure has an inner shell (9), which in the closed state of the door (5) is facing towards a receiving space (6) for foodstuffs of the household refrigeration appliance (1) which can be closed off by the door (5), and has an outer shell (8), which in the closed state of the door (5) is facing away from the receiving space (6) for foodstuffs which can be closed off by the door (5), wherein the vacuum insulation element (7) is arranged in the door (5) such that an outer side region (5a) of the door (5) is formed by the outer shell (8), at least in regions, **characterised in that** the inner shell (9) is embodied by a single-layer film and that the inner shell (9) is covered by a cover element (18) on the side facing away from the outer shell (8), so that the inner shell (9) is protected and that the cover element (18) is embodied unevenly and has at least one notch-like protrusion (21), wherein the protrusion (21) extends in parallel with a flange-like side edge (19) and is embodied as contiguous with the side edge (19).

2. Door (5) according to claim 1, **characterised in that** the outer shell (8) is embodied as made of plastic.

3. Door (5) according to claim 1 or 2, **characterised in that** the outer shell (8) is a multilayer film.

4. Door (5) according to one of the preceding claims, **characterised in that** the outer shell (8) is embodied as uneven, at least in the outer side region (5a) of the door.

5. Door (5) according to claim 4, **characterised in that** the outer side region (5a) is raised facing away from the inner shell (9).

6. Door (5) according to one of the preceding claims, **characterised in that** the inner shell (9) and the outer shell (8) are arranged on a connecting edge (10) connecting the shells (8, 9) in a slot-like first receptacle (14) in a support (13).

7. Door (5) according to claim 6, **characterised in that** an outer side (14) of the support (13) is adapted in its contour path such that it continues the uneven contour path of the outer side region (5a) of the vacuum insulation element (7) and a further outer side region (5b) of the door (5) is formed by the outer side (15) of the support (13).

8. Door (5) according to one of the preceding claims, **characterised in that** the cover element (18) is arranged at a distance from the inner shell (9) and a cavity (22) is formed between the cover element (18) and the inner shell (9).

9. Door (5) according to claim 8, **characterised in that** the cavity (22) is filled with a filler material, in particular a thermally insulating filler material, at least in regions.

10. Door (5) according to one of the preceding claims, **characterised in that** the cover element (18) is arranged with a flange-like side edge (19) in a slot-like second receptacle (20) of a support (13).

11. Door (5) according to one of the preceding claims, **characterised in that** the protrusion (21) is embodied such that it tapers at an increasing distance from the inner shell (9).

12. Door (5) according to one of the preceding claims, **characterised in that** the inner shell (9) and the outer shell (8) are arranged on a support (13), on which at least one further functional element of the door (5), in particular a door handle (16) and/or an operating and/or display element and/or a seal (17), is arranged.

13. Door (5) according to one of the preceding claims, **characterised in that** the inner shell (9) and the outer shell (8) are arranged on a support (13) which extends at least on the two longitudinal sides of the door (5), in particular is embodied as a peripheral frame, and outer sides (15) of the support (13) form outer side regions (5b) of the door (5).

14. Household refrigeration appliance (1) with a door (5) according to one of the preceding claims.

## Revendications

1. Porte (5) pour un appareil frigorifique ménager (1) comprenant un élément d'isolation sous vide (7) possédant une enveloppe qui entoure un espace creux sous vide (11), dans laquelle l'enveloppe comprend une coque intérieure (9) qui, à l'état fermé de la porte (5), est tournée vers un espace de réception (6) pour des denrées alimentaires de l'appareil frigorifique ménager (1) pouvant être fermé par la porte (5), et comprend une coque extérieure (8) qui, à l'état fermé de la porte (5), est opposée à l'espace de réception (6) pour des denrées alimentaires pouvant être fermé par la porte (5), dans lequel l'élément d'isolation sous vide (7) est agencé dans la porte (5) de telle manière qu'une partie de face extérieure (5a) de la porte (5) est formée au moins en partie par la coque extérieure (8),
**caractérisée en ce que** la coque intérieure (9) est formée par une feuille monocouche et **en ce que** la coque intérieure (9) est recouverte par un élément de recouvrement (18) sur le côté opposé à la coque extérieure (8) de telle manière que la coque intérieure (9) est protégée et l'élément de recouvrement (18) est formé de façon inégale et comprend au moins une protubérance (21) de type encoche, dans laquelle la protubérance (21) s'étend parallèlement à un bord latéral (19) en forme de bride et est formée de façon attenante au bord latéral (19).

2. Porte (5) selon la revendication 1, **caractérisée en ce que** la coque extérieure (8) est formée d'une matière plastique.

3. Porte (5) selon la revendication 1 ou 2, **caractérisée en ce que** la coque extérieure (8) est une feuille multicouche.

4. Porte (5) selon l'une des revendications précédentes, **caractérisée en ce que** la coque extérieure (8) est formée de façon inégale au moins dans une partie de face extérieure (5a) de la porte.

5. Porte (5) selon la revendication 4, **caractérisée en ce que** la partie de face extérieure (5a) est bombée dans le sens opposé à la coque intérieure (9).

6. Porte (5) selon l'une des revendications précédentes, **caractérisée en ce que** la coque intérieure (9) et la coque extérieure (8) sont agencées sur un bord de jonction (10) reliant les coques (8, 9) dans un premier logement en forme de fente (14) dans un support (13).

7. Porte (5) selon la revendication 6, **caractérisée en ce qu'**un côté extérieur (15) du support (13) est ajusté de façon à prolonger dans sa forme de contour la forme de contour inégale de la partie de face extérieure (5a) de l'élément d'isolation sous vide (7) et une partie de face extérieure (5b) supplémentaire de la porte (5) est formée par le côté extérieur (15) du support (13).

8. Porte (5) selon l'une des revendications précédentes, **caractérisée en ce que** l'élément de recouvrement (18) est disposé à distance de la coque intérieure (9) et **en ce qu'**un espace creux (22) est formé entre l'élément de recouvrement (18) et la coque intérieure (9).

9. Porte (5) selon la revendication 8, **caractérisée en ce que** l'espace creux (22) est rempli au moins en partie d'un matériau de remplissage, notamment d'un matériau de remplissage thermiquement isolant.

10. Porte (5) selon l'une des revendications précédentes, **caractérisée en ce que** l'élément de recouvrement (18) est disposé avec un bord latéral en forme de bride (19) dans un second logement (20) en forme de fente d'un support (13).

11. Porte (5) selon l'une des revendications précédentes, **caractérisée en ce que** la protubérance (21) se rétrécit à mesure que la distance par rapport à la coque intérieure (9) augmente.

12. Porte (5) selon l'une des revendications précédentes, **caractérisée en ce que** la coque intérieure (9) et la coque extérieure (8) sont agencées sur un support (13), sur lequel au moins un élément fonctionnel supplémentaire de la porte (5), notamment une poignée de porte (16) et/ou une unité de commande et/ou d'affichage et/ou un joint d'étanchéité (17) est disposé.

13. Porte (5) selon l'une des revendications précédentes, **caractérisée en ce que** la coque intérieure (9) et la coque extérieure (8) sont agencées sur un support (13), qui s'étend au moins sur les deux côtés longitudinaux de la porte (5) et qui est conçu notamment sous forme de cadre périphérique, et des parties de face extérieure (5b) de la porte (5) forment des côtés extérieurs (15) du support (13).

14. Appareil frigorifique ménager (1) comprenant une porte (5) selon l'une des revendications précédentes.
